# EUROPÄISCHE PATENTSCHRIFT

(11) **EP 1 470 407 B1**
(45) Veröffentlichungstag und Bekanntmachung des Hinweises auf die Patenterteilung: **16.07.2008**
(21) Anmeldenummer: 03704492.2
(22) Anmeldetag: 29.01.2003
(51) Int. Cl.: G01N 1/42, A01N 1/02

(54) **VERFAHREN ZUR KRYOKONSERVIERUNG BIOLOGISCHER PROBEN**
METHOD FOR THE CRYOCONSERVATION OF BIOLOGICAL SAMPLES
PROCÉDÉ POUR LA CRYOCONSERVATION D'ECHANTILLONS BIOLOGIQUES

(30) Priorität: 30.01.2002 DE 10203630
(43) Veröffentlichungstag der Anmeldung: 27.10.2004
(73) Patentinhaber: Fraunhofer-Gesellschaft zur Förderung der angewandten Forschung e.V., 80686 München (DE)
(72) Erfinder: ZIMMERMANN, Ulrich, 97295 Waldbrunn (DE); ZIMMERMANN, Heiko, 66113 Saarbrücken (DE)
(74) Vertreter: Hertz, Oliver
(86) Internationale Anmeldenummer: PCT/EP2003/000902
(87) Internationale Veröffentlichungsnummer: WO 2003/065014

(56) Entgegenhaltungen:
- EP-A- 0 950 432
- WO-A-00/24437
- WO-A-96/21351
- WO-A-98/20353
- DE-U- 20 013 334
- US-A- 4 018 911
- US-A- 4 865 871
- US-A- 5 587 228
- US-A- 5 986 169
- US-A1- 2001 030 040
- GREIL P: "Biomorphous ceramics from lignocellulosics" JOURNAL OF THE EUROPEAN CERAMIC SOCIETY, ELSEVIER SCIENCE PUBLISHERS, BARKING, ESSEX, GB, Bd. 21, Nr. 2, Februar 2001 (2001-02), Seiten 105-118, XP004227988 ISSN: 0955-2219
- PATENT ABSTRACTS OF JAPAN vol. 2000, no. 19, 5. Juni 2001 (2001-06-05) & JP 2001 033053 A (IZENA:KK), 9. Februar 2001 (2001-02-09)
- PATENT ABSTRACTS OF JAPAN vol. 1999, no. 09, 30. Juli 1999 (1999-07-30) & JP 11 093643 A (TOYOTA MOTOR CORP), 6. April 1999 (1999-04-06)

## Beschreibung

Die Erfindung betrifft Verfahren zur Kryokonservierung biologischer Proben.

In der modernen Biomedizin und Biotechnologie besteht ein ständig wachsender Bedarf an kryokonservierten biologischen Materialien, insbesondere Zellen, Zellgruppen, natürlichen oder künstlichen Geweben, ganzen Organen und Zellen von embryonalen Organismen. Unter Kryokonservierüng versteht man die Abkühlung der biologischen Materialien auf tiefe, sogenannte kryogene Temperaturen, insbesondere im Bereich von -80 °C bis -196 °C. Unter diesen Bedingungen kommt der Stoffwechsel lebender Zellen praktisch zum Stillstand, so dass die Zellen über mehrere Jahre gelagert werden können.

Um die Vitalität von kryokonservierten Zellen zu erhalten, verwendet man spezielle Kryomedien, die Schutzstoffe (Kryoprotektiva) wie z. B. Dimethylsulfoxid (DMSO), Ethylenglycol, Glycerol und Zucker wie z.B. Trehalose oder Glukose umfassen. Kryoprotektiva schützen die Zellen durch Stabilisierung der Zellmembranen und Makromoleküle und durch Inhibierung der intrazellulären Eisbildung. Die intrazellulären Eiskristalle sind hauptverantwortlich für eine irreversible mechanische Schädigung der Zellmembranen (siehe S. S. N. Murthy in "Cryobiology" Bd. 36, 1998, S.84-96). Die optimale Zusammensetzung des Kryomediums wird auf den jeweiligen Zell- oder Gewebetyp experimentell angepasst.

Neben der Zusammensetzung des Kryomediums, kommt dem Einfrier- und Auftauprotokoll (Geschwindigkeit, Temperaturgradienten, Dauer etc.) eine entscheidende Rolle für die Erhaltung hoher Zellvitalitäten zu. Dabei wurden bisher zahlreiche Protokolle für verschiedene Probenarten und Konservierungsbedingungen publiziert, die sowohl schnelle als auch langsame Kühl- und Auftaugeschwindigkeiten oder eine Kombination aus beiden beschreiben (siehe z. B. J. M. Baust et al. in "Cell Transplantation" Bd. 10, 2001, S. 561-571, und M. Miyamoto et al. in "Cell Transplantation" Bd. 10, 2001, S. 363-371). Es hat sich gezeigt, dass in jedem Fall eine exakt gesteuerte Temperaturregelung notwendig ist, da die Zellvitalität sehr stark von der Kühl-/Auftaugeschwindigkeit abhängt.

Werden Zellsuspensionen oder Gewebe in konventionellen Kryogefäßen aus Kunststoff eingefroren, ist eine genaue Einhaltung der gleichen Kühlgeschwindigkeit über alle Zellen in der Probe nicht gewährleistet. Dazu tragen zum einen das ungünstige Oberflächen-/Volumenverhältnis (Kryogefäß/Zellprobe) und zum anderen die geringen Wärmeleitfähigkeiten des üblicherweise verwendeten Kunststoffes der Kryogefäße sowie des wässrigen Kryomediums bei.

Dies führt nicht nur zu einem steilen Temperaturgradienten innerhalb der gefrorenen Probe, sondern auch zu einer starken räumlichen Inhomogenität der Kühlrate. Die einzelnen Zellen erfahren je nach ihrer Lage in der Probe unterschiedliche Temperaturbedingungen, Kühl- und Auftauraten. Diese starke Inhomogenität in den Kühlgeschwindigkeiten für die einzelnen Zellen führt deshalb zu starken Verlusten in der Vitalität, da nur das Einhalten der optimalen Kühlgeschwindigkeit bei allen Zellen in einer hohen Vitalität der Probe resultiert.

Zur Verminderung und Beseitigung dieser Probleme sind die folgenden Lösungsansätze bekannt. Von B. M. Eriksson et al. (siehe "Anim. Reprod. Sci." Bd. 63, 2000, S. 205-220) konnte beim Einfrieren von Schweinespermien in flachen Kunststoffbehältnissen (sog. flat-packs) eine signifikante Erhöhung in der Beweglichkeit der Spermien im Vergleich zum Einfrieren in zylindrischen Kunststoffröhrchen (sog. maxi-straws) nachgewiesen werden. Dieses Ergebnis wird von den Autoren mit einem gleichmäßigeren Einfrier- und Auftauprozess in den flachen Kryogefäßen begründet. Problematisch ist auch eine stark verminderte Auftaugeschwindigkeit im Kern der Proben in den "maxi-straws" aufgrund der isolierenden Eigenschaften des bereits getauten Wassers in der Peripherie der Proben.

Von S.-P. Park et al. (siehe "Human Reproduction" Bd . 15, 2000, S. 1787-1790) wird das ultra-schnelle Einfrieren humaner Embryonen auf Kupfergittern beschrieben, die ursprünglich für die Elektronenmikroskopie konzipiert wurden. Hierbei erfolgt eine sehr schnelle Wärmeableitung beim Einbringen der Proben in flüssigen Stickstoff, was wiederum der Vitalität der Embryonen förderlich ist.

Aus der Praxis ist ein kommerziell verfügbares System für die Lagerung von Mikroorganismen bekannt (Produkt "Micrybank", Hersteller: SensLab-GmbH, Leipzig, Deutschland). Mikroorganismen werden an der porösen Oberfläche von Keramikkügelchen gebunden, die in einem speziellen Kryomedium konserviert werden. Dieses System dient allerdings nur einer verbesserten Handhabung der Proben. Der Einfrierprozess wird nicht optimiert. Die Keramikkugeln besitzen eine geringere Wärmeleitfähigkeit, so dass ein schnelles Einfrieren oder Auftauen behindert wird. Außerdem sind Zellen oder Gewebe aufgrund ihrer Größe nicht für eine Adsorption an die porösen Oberflächen geeignet.

Es ist auch bekannt, biologische Proben in Form kleinster Probenvolumina (ml- oder µl-Bereich) auf geeignet strukturierten, zweidimensionalen Kryosubstraten einzufrieren. Dabei werden die genannten Probleme von Temperatur- und Kühlgeschwindigkeitsgradienten vermieden. Mit dieser Technik können nur geringe Probenmengen auf einem Kryosubstrat gelagert werden, was bei Anwendungen nachteilig sein kann, die große Probenvolumina (z. B. im ml-Bereich) erfordern.

In WO 00/24437 ist die Verwendung von porösem Silikongummi als Trägermaterial insbesondere zur Kryokonservierung biologischer Materialien offenbart. Die Verwendung eines porösen Keramikmaterials zur Bildung einer Transportleitung für Kühlflüssigkeiten ist in US 5 587 228 beschrieben. Weitere Anwendungen poröser Materialien zur Aufnahme von Kühlmedien sind in US 2001/0030040, JP 2001033053 und JP 11093643 beschrieben.

Die Aufgabe der Erfindung ist es, verbesserte Verfahren für die Kryokonservierung biologischer Proben bereitzustellen, mit denen die Nachteile herkömmlicher Probenträger überwunden werden. Erfindungsgemäß verwendete Probenträger sollen insbesondere die reproduzierbare Einstellung definierter Einfrier- oder Auftauprotokolle ermöglichen, wobei Temperaturgradienten oder Variationen der Kühl- oder Auftaugeschwindigkeit innerhalb einer Probe vermieden werden sollen. Der im Verfahren verwendete Probenträger soll ferner für die Konservierung großer Probenvolumen geeignet sein. Die Aufgabe der Erfindung ist es auch, verbesserte Verfahren zur Kryokonservierung bereitzustellen, mit denen die Nachteile herkömmlicher Kühl- oder Auftauprotokolle vermieden werden.

Diese Aufgaben wird mit einem Verfahren mit den Merkmalen gemäß Patentanspruch 1 gelöst. Vorteilhafte Ausführungsformen und Anwendungen der Erfindung ergeben sich aus den abhängigen Ansprüchen.

Bei dem Verfahren gemäß der Erfindung wird insbesondre ein Probenträger für die Kryokonservierung insbesondere biologischer Proben mit mindestens einem Probenreservoir zur Aufnahme einer biologischen Probe verwendet, in dem ein Trägerkörper aus einem Material mit einer Struktur angeordnet ist, die eine Vielzahl von inneren, offenen Hohlräumen aufweist, die mit der Probe befüllbar sind. Der Trägerkörper mit den inneren Hohlräumen besitzt eine innere Oberfläche, die wesentlich größer als die innere Oberfläche des Probenreservoirs ist. Durch diese Maßnahme wird vorteilhafterweise das Oberflächen-/Volumenverhältnis gegenüber herkömmlichen Probenträgern erheblich verbessert. Durch thermisch leitende Verbindung des Trägerkörpers mit einem Kühlmedium können die Kühl- und Auftauvorgänge in Bezug auf die Temperaturverteilung und die Geschwindigkeit der Temperaturänderung erheblich homogenisiert werden.

Der Trägerkörper besteht zumindest teilweise aus einem Material, das eine Wärmeleitfähigkeit wie ein Metall besitzt. Damit kann die aktuelle Temperatur des Kühlmediums mit erhöhter Geschwindigkeit auf die Probe übertragen werden. Vorteilhafterweise können Abkühl- und Auftauprotokolle mit höherer Genauigkeit und Reproduzierbarkeit durchlaufen werden. Der Trägerkörper besteht vorzugsweise aus einem Metall, einer metallischen Legierung oder einem Kompositmaterial, das ein Metall oder eine Metalllegierung enthält. Der Trägerkörper kann auch aus einem Polymer- oder Keramikmaterial bestehen, dessen innere Oberfläche mit einem Metall, einer metallischen Legierung, einem Halbleitermaterial oder einer chemischen Verbindung beschichtet ist, die eine Wärmeleitfähigkeit entsprechend der Wärmeleitfähigkeit von Metallen besitzt. Das Polymer kann bspw. durch einen synthetischen Kunststoff oder ein festes Material auf der Grundlage eines natürlichen organischen Materials, insbesondere auf Zellulosebasis, wie z. B. durch pyrolisiertes Holz gebildet werden.

Die Struktur mit inneren Hohlräumen wird vorzugsweise durch einen Körper gebildet, dessen Volumen von Waben, Poren, Kanälen oder anderen durchlässigen Strukturen durchsetzt ist. Die kleinste Querschnittsdimension der Hohlräume ist vorteilhafterweise im Bereich von 1 µm bis 10 mm, vorzugsweise im Bereich von 5 µm bis 5 mm, gewählt. Die Hohlräume können regelmäßig (Wabenstruktur) oder unregelmäßig (innen beschichtete, pflanzlichen oder tierischen Gewebe oder Organe, Schwamm- oder Schaumstruktur) angeordnet sein. Die regelmäßige Anordnung besitzt den Vorteil, dass das im Trägerkörper aufgenommene Probenvolumen quantitativ genauer angegeben werden kann. Die unregelmäßige Struktur kann je nach dem Herstellungsverfahren des Trägerkörpers in der Regel mit einem günstigeren Oberflächen-/Volumenverhältnis herstellbar sein.

Der Trägerkörper mit der inneren Oberfläche ist in seiner äußeren Gestalt vorzugsweise an die Innenform des mindestens einen Probenreservoirs des Probenträgers angepasst. Dieses Merkmal besitzt den Vorteil einer hohen Ausnutzung des Probenreservoirvolumens und einer Homogenisierung der Kryokonservierungsbedingungen im gesamten Probenreservoir. Der Trägerkörper kann fest oder lösbar im Probenreservoir angeordnet sein. Die feste Anbringung besitzt den Vorteil, dass der Probenträger ein kompaktes, autonomes Bauteil bildet, das insbesondere in automatisierten Systemen problemlos handhabbar ist. Ist der Trägerkörper aus dem Probenreservoir entnehmbar, so ergeben sich Vorteile in Bezug auf die Reinigung und/oder eine Vorbehandlung des Trägerkörpers (z. B. Vorkühlung).

Ein weiterer Vorteil besteht darin, dass der Trägerkörper als Wärmeaustauscher verwendet werden kann. Wenn bspw. das Probenreservoir nur teilweise befüllt ist, so dass nur ein Teil der Hohlstruktur des Trägerkörpers eine Probe enthält, so kann die übrige, überstehende Struktur dem Wärmeaustausch dienen. Beispielsweise kann ein dampfförmiges Kühlmedium über die freien Teile des Trägerkörpers streichen und damit die Wärmeabfuhr beschleunigen. Umgekehrt ist beim Auftauen auch eine Beschleunigung der Wärmezufuhr möglich. Gemäß einer vorteilhaften Ausführungsform kann der Trägerkörper zusätzlich mit einem Wärmeaustauschelement ausgestattet sein, das vom Trägerkörper absteht und in das Kühlmedium ragt. Bei dieser Gestaltung wird der Wärmeaustausch auch bei vollständig befülltem Trägerkörper verbessert.

Gemäß einer Variante der Erfindung wird der Trägerkörper insbesondere aus dem Trägermaterial eines herkömmlichen Katalysators gebildet, wie er bei Kraftfahrzeugen zur Schadstoffreduzierung verwendet wird. Trägerkörper aus Katalysatorstrukturen bestehen bspw. aus einem Grundmaterial aus Stahl oder Keramik, das mit einem Edelmetall (z. B. Platin) beschichtet ist. Die Verwendung von Katalysatorstrukturen besitzt den besonderen Vorteil, dass die bekannten Katalysatorträger bereits in Bezug auf eine große innere Oberfläche optimiert sind und aus inerten Materialien bestehen, die für die Verwendung bei der Kryokonservierung geeignet sind.

Gemäß einer weiteren Variante der Erfindung besteht der Trägerkörper insbesondere aus einer sog. biomorphen Keramik, die aus einem Polysaccharid-basierten Material hergestellt ist. Dieses Material kann vorteilhafterweise aus Pflanzen hergestellt werden. Je nach dem Wachstumseigenschaften der Pflanzen sind Hohlräume mit den jeweils gewünschten Größenparametern einstellbar. Ein weiterer Vorteil biomorpher Keramiken besteht in deren Biokompatibilität.

Der Gegenstand der Erfindung ist das Verfahren zur Kryokonservierung unter Verwendung des genannten Probenträgers. Eine biologische Probe wird durch an sich verfügbare Techniken, wie z. B. Pipettieren oder Umfüllen, auf den Trägerkörper aufgebracht und von diesem aufgenommen. Gemäß einer bevorzugten Ausführungsform des erfindungsgemäßen Verfahrens wird ein vorgekühlter Trägerkörper verwendet. Vorteilhafterweise wird damit die Probe vor dem eigentlichen Kühlprozess einer gleichmäßigen Vorkühlung unterzogen.

Erfindungsgemäß konservierte biologische Proben umfassen allgemein Flüssigkeiten, die biologisches Material enthalten. Die Flüssigkeit umfasst beispielsweise ein Kulturmedium, eine Nährstofflösung oder ein anderes kompatibles Umhüllungsmedium. Vorteilhafterweise kann die Erfindung bei den interessierenden biologischen Materialien, wie z. B. Zellen, Zellgruppen, natürlichen oder künstlichen Geweben, Gewebestücken, Organen, Organteilen oder Zellen von embryonalen Organismen verwendet werden. Die Probe liegt beispielsweise als Suspensionsprobe oder als Flüssigkeit vor, in der das biologische Material eingeschlossen ist. Die Probe kann somit auch Flüssigkeiten umfassen, in denen biologische Materialien z. B. auf einem Gefäßboden liegen. Die Dimensionen der Materialien und der Hohlräume im Probenträger sind allgemein zueinander abgestimmt. Es können mit Vorteil insbesondere biologische Gewebe oder Gewebeteile konserviert werden, die zur Gewebeproduktion ("Tissue Engineering") vorgesehen sind.

Weitere Vorteile und Einzelheiten der Erfindung werden im Folgenden unter Bezug auf die beigefügten Zeichnungen beschrieben. Es zeigen:
- Figuren 1 und 2:: schematische Ansichten verschiedener Ausführungsformen erfindungsgemäß verwendeter Probenträger, und
- Figuren 3 und 4:: experimentelle Ergebnisse, die mit erfindungsgemäß verwendeten Probenträger erzielt wurden.

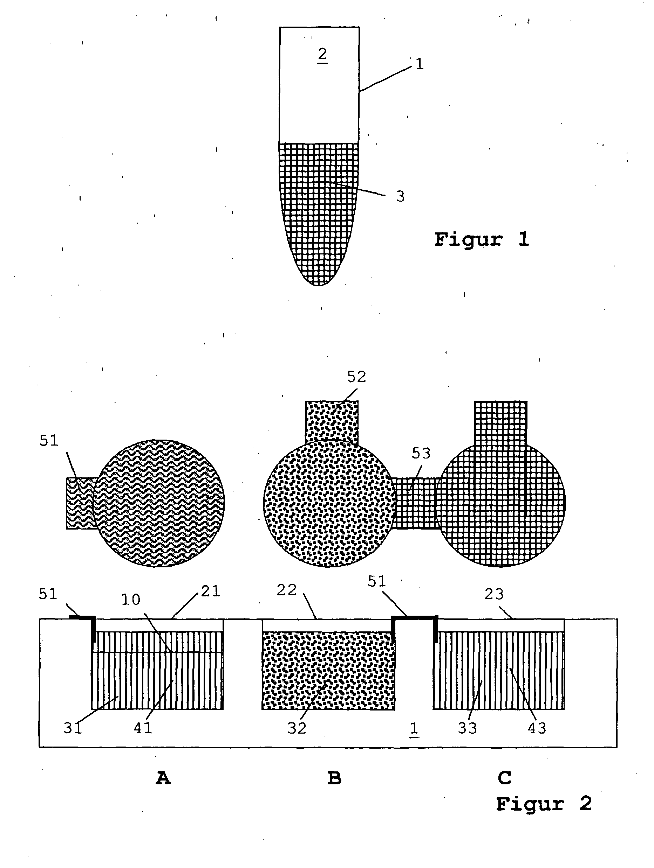

Ein erfindungsgemäß verwendeter Probenträger 1 umfasst entsprechend der in Fig. 1 illustrierten Ausführungsform ein Probenreservoir 2, in dem ein Trägerkörper 3 angeordnet ist. Der Probenträger 1 besitzt bspw. die Form eines nach unten verschlossenen Zylinders. Er kann bspw. durch ein an sich bekanntes Probenröhrchen oder Reagenzglas gebildet werden. Der Trägerkörper 3 besitzt eine Volumenstruktur mit einer großen inneren Oberfläche. Die äußere Form des Trägerkörpers 3 ist an die Innenform des Probenreservoirs angepasst oder geringfügig größer gebildet (siehe unten). Das Innenvolumen des Probenreservoirs 2, das vom Trägerkörper 3 eingenommen wird, liegt bspw. im Bereich von 0.5 bis 10 ml, vorzugsweise 1 bis 5 ml.

Der Trägerkörper 3 besteht bspw. aus einem porösen, wabenartigen, schwamm- oder schaumartigen metallischen Werkstoff mit einer hohen Wärmeleitfähigkeit oder aus innen beschichteten, pflanzlichen oder tierischen Geweben oder Organen. Der Trägerkörper ermöglicht vorteilhafterweise eine gezielte, schnelle und regulierbare Wärmezu- und -ableitung. Die Wärmeleitfähigkeit beträgt bspw. mindestens 0.1 J/K kg. Das Verhältnis der inneren Oberfläche zum Volumen des Trägerkörpers hängt von der Art des verwendeten Trägerkörpermaterials und/oder dessen Herstellungsbedingungen ab. Bei der konkreten Anwendung wird das Trägerkörpermaterial oder das genannte Oberflächen-VolumenVerhältnis je nach Eigenschaften der zu konservierenden Proben (z. B. Suspensionsproben) und der zur Verfügung stehenden Kryoanlage gewählt. Das Verhältnis kann bspw. 4000 m⁻¹ betragen. Die inneren Hohlräume des Trägerkörpers werden durch Wände begrenzt, deren Dicke vorzugsweise kleiner als 0.2 bis 0.5 mm ist.

Der Trägerkörper 3 ist bspw. aus dem Material eines Metallkatalysators für ein Kraftfahrzeug geformt. Die Porengröße oder Zahl der Zellen pro Volumen wird anwendungsabhängig je nach den zu konservierenden biologischen Proben gewählt. Der Trägerkörper 3 besteht bspw. aus Platin (Wärmeleitfähigkeit 0.032 J/K kg), Stahl (0.11 J/K kg) oder Aluminium (0.22 J/K kg). Der Trägerkörper 3 ist bspw. aus einem Metall- oder Keramik-Metall-Katalysator für Kraftfahrzeuge vom Hersteller Fa. Matrix, Fürstenfeldbruck, Deutschland, zugeschnitten.

Ein Vorteil der herkömmlichen Katalysatorstrukturen besteht in deren geringer Wärmeausdehnung. In den verschiedenen Phasen eines Konservierungsvorganges behält der Trägerkörper im Wesentlichen seine Außenmaße bei.

Alternativ kann der Trägerkörper aus einem Kompositmaterial aus einem Polymer oder einer Keramik mit einer inneren Beschichtung aus gut wärmeleitendem Material bestehen. Der Trägerkörper kann ferner aus einem natürlichen Material auf Polysaccharidbasis (z. B. Zellulose, Alginate, Pektine), insbesondere auf Basis von Holz oder Pflanzenfasern, hergestellt sein, das einer Pyrolisierung und einer Behandlung der inneren Oberfläche, z. B. einer Silanisierung oder einer Metallabscheidung unterzogen worden ist (sog. biomorphe Keramik). Als Trägerkörper ist insbesondere silanisiertes Holz mit einer porösen Struktur geeignet, wie es von P. Greil in "Journal of the European Ceramic Society" Bd. 21, 2001, S. 105-188 beschrieben wird. Weitere Beispiele für biokompatible Materialien pflanzlichen oder tierischen Ursprungs umfassen Trägerkörper auf der Basis von Kakteen, Euphorbien, Diatomeen, Papyrusstauden, Algave, Stockrosen, Holunder, geprägte tierische Häute, Knochen, insbesondere Röhrenknochen, Schwämme und Bienenwaben. Alternativ kann der Trägerkörper aus einem natürlichen, porösen Mineral, z. B. Blähton, mit einer inneren Beschichtung hergestellt sein.

Ein Trägerkörper aus biomorpher Keramik wird nach dem folgenden Verfahren hergestellt. Zunächst wird ein Holzkörper pyrolisiert, um ein entsprechendes Leitbündelgerüst aus Kohlenstoff zu bilden. Die Pyrolisierung erfolgt bspw. bei 1400 °C. Anschließend wird das Leitbündelgerüst in ein Beschichtungsbad getaucht. Die Flüssigkeit des Beschichtungsbades benetzt die innere Oberfläche des Leitbündelgerüstes. Die Beschichtung erfolgt bspw. in einer Siliziumschmelze bei rd. 1600 °C. Bei Abkühlung des aus der Schmelze entnommenen Gerüstkörpers wird auf der inneren Oberfläche eine Siliziumschicht abgelagert. Vorteilhafterweise können je nach Auswahl des verwendeten Holzes Trägerkörper mit verschiedenen Porengrößen hergestellt werden. Des Weiteren besteht eine große Variabilität in Bezug auf die Außendimensionen der Trägerkörper. Silanisierter Bambus liefert bspw. Trägerkörper mit Durchmessern von rd. 1 bis 5 cm. Mit Rattan sind Trägerkörper mit Durchmessern bis zu rd. 1 cm herstellbar.

Alternativ zur Silanisierung kann eine Beschichtung des pyrolisierten Leitbündelgerüsts (Xylem) mit biokompatiblen, nichttoxischen Metallen erfolgen. Als Beschichtungsbad kann bspw. eine Gold- oder Platinschmelze verwendet werden.

Die innere Oberfläche eines Trägerkörpers kann allgemein eine Mehrfachbeschichtung tragen. Beispielsweise kann bei den biomorphen Keramiken eine Mehrfachschicht aus Silizium, Gold und anderen biokompatiblen Materialien gebildet werden. Allgemein können zur Beschichtung innerer Oberflächen von Trägerkörpern Techniken verwendet werden, wie sie z. B. aus der Halbleitertechnik von der Wafer-Beschichtung bekannt sind.

Ein weiterer Vorteil von Trägerkörpern besteht in deren mechanischer Deformierbarkeit. Obwohl die Trägerkörper an sich aus einem festen Material bestehen, ist ihre Außenform wegen der stark durchlässigen Volumenstruktur leicht elastisch verformbar. Der Trägerkörper kann zunächst mit einer Außenform hergestellt werden, die geringfügig größer als die Innenform des Probenreservoirs ist. Beim Einsetzen des Trägerkörpers in das Probenreservoir wird dieser zusammengedrückt, so dass er unter Wirkung der elastischen Deformation im Probenreservoir festsitzt.

Fig. 2 illustriert einen Probenträger 1 in Form einer Zellkulturplatte mit mehreren Probenreservoiren 21, 22, 23, ..., in denen jeweils ein Trägerkörper 31, 32, 33, ... angeordnet ist. Die Probenreservoire besitzen bspw. eine zylindrische Gestalt. Im oberen Teil von Fig. 2 sind die Trägerkörper in schematischer Draufsicht illustriert. Die verschiedenen Muster der Teilbilder A, B und C illustrieren die verschiedenen Formen von inneren Hohlräumen, mit denen ein erfindungsgemäß verwendeter Trägerkörper ausgestattet sein kann.

Beispielsweise besteht der Trägerkörper gemäß Fig. 2A aus wellenförmigen Blechen, die versetzt oder unter Verwendung zwischengeordneter ebener Fläche so mit einander verbunden sind, dass eine Vielzahl von geraden Kanälen 41 gebildet wird. Die Kanäle 41 durchsetzen den Trägerkörper in axialer Richtung. Gemäß Fig. 2B besitzt der Trägerkörper eine ungeordnete Wabenstruktur. Figur 2C zeigt eine geordnete Wabenstruktur, ebenfalls mit axial verlaufenden Kanälen 43.

Figur 2A illustriert schematisch die Füllhöhe einer Suspensionsprobe 10. Der über die Füllhöhe freistehende Bereich des Trägerkörpers 31 fördert den Wärmeaustausch mit der Umgebung.

Zur weiteren Verbesserung des Wärmeaustausches auch bei vollständig gefülltem Trägerkörper kann dieser mit mindestens einem abstehenden Wärmeaustauschelement 51 ausgestattet sein. Das Wärmeaustauschelement 51 besteht bspw. aus dem gleichen Material wie der Trägerkörper. Es ist bspw. ein abstehender Streifen vorgesehen, der in den Raum ragt oder auf der Oberfläche der Wand des Probenreservoirs angeordnet ist.

Wärmeaustauschelemente 52, 53 können als Verbindungen zwischen Trägerkörpern benachbarter Probenreservoire vorgesehen sein, wie in den Figuren 2B und 2C schematisch illustriert ist. Über die Wärmeaustauschelemente 52, 53 wird aus einer Vielzahl von Trägerkörpern 32, 33 ein Verbund gebildet, mit dem simultan eine Vielzahl von Probenreservoiren ausgestattet werden kann. Bei dem erfindungsgemäßen Verfahren können bspw. Trägerkörper verwendet werden, die entsprechend dem Format einer Mikro- oder Nanotiterplatte angeordnet und über Wärmeaustauschelemente miteinander verbunden sind, einen Trägerkörperverbund bilden.

Zur Kryokonservierung wird ein Probenträger 1 gemäß Fig. 1 oder 2 mit einem Kühlmedium in Verbindung gebracht, das mit dem Trägerkörper in direktem Wärmeaustausch oder, vermittelt über das Wandmaterial des Probenreservoirs und/oder Wärmeaustauschelemente, indirekt gekoppelt ist.

### Ausführungsbeispiel

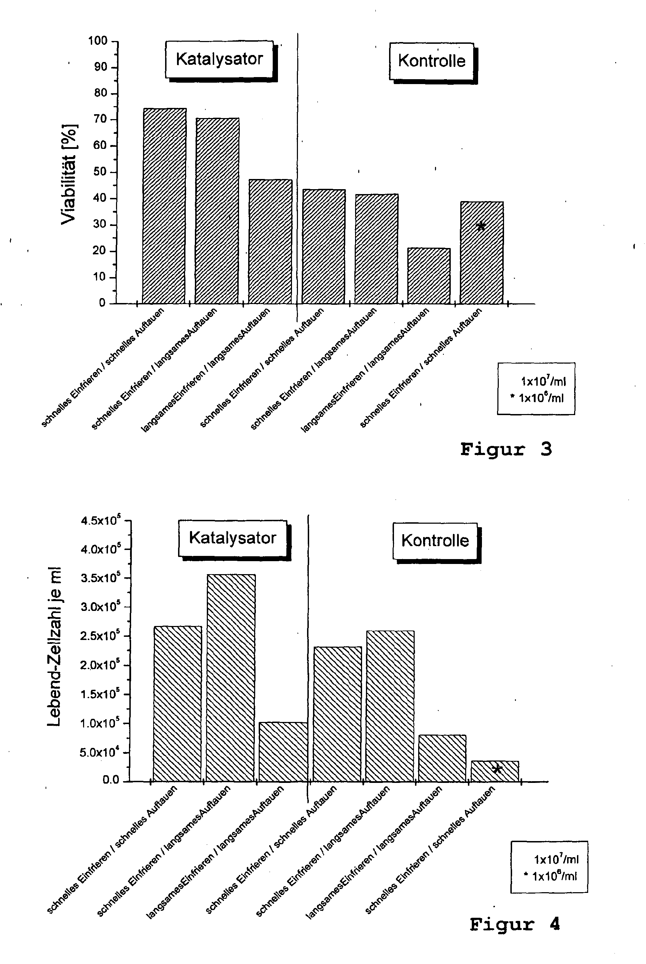

Die in den Figuren 3 und 4 illustrierten Versuchsergebnisse wurden unter den folgenden experimentellen Bedingungen ermittelt. Es wurden Zellen der Zelllinie Sp2 aus der exponentiellen Wachstumsphase kryokonserviert. Als Kryomedium wurde eine Mischung aus 90% FCS und 10% DMSO oder eine Trehalose-haltige Lösung verwendet. Als Probenträger wurde eine Zellkulturplatte gemäß Fig. 2 mit sechs Probenreservoiren verwendet. In jedem Probenreservoir wurde eine Scheibe aus einem Katalysatormaterial mit einem Volumen von rd. 0.5 * 2 * 2 cm³ verwendet. Die Trägerkörper wurden mit Ethanol sterilisiert und auf ihrer Unterseite mit einer Kunststoffschicht abgeschlossen.

Zur Bereitstellung einer Suspensionsprobe werden zunächst Sp2-Zellen in Kulturflaschen gesammelt und mit einer CASY-Messung in Bezug auf die Größenverteilung und Zellenzahl analysiert. Es wurde eine Suspensionsprobe mit 8.2 * 10⁵ Zellen pro ml gebildet. Die Suspensionsprobe wurde vor der Kryokonservierung rd. 10 Minuten mit 1000 rpm zentrifugiert. Die dabei gebildeten Zell-Pellets wurden in je 1 ml vorgekühltem Kühlmedium resuspendiert und in die Trägerkörper einpipettiert.

Es wurden verschiedene Einfrier- und Auftauprotokolle realisiert. Ein schnelles Einfrieren bedeutet die sofortige Überführung in eine -80 °C - Truhe. Ein langsames Einfrieren bedeutet eine Vorkühlung für eine Stunde in einer -20 °C - Truhe , gefolgt von einer Überführung in eine -80 °C - Truhe. Ein schnelles Auftauen bedeutet eine direkte Überführung aus einer -80 °C - Truhe zur Raumtemperatur. Ein langsames Auftauen umfasst eine erste Erwärmung für eine Stunde in einer -20 °C - Truhe, eine Lagerung für 30 Minuten auf Eis unter Zupipettieren von 10 ml CGM (37 °C) und wiederholtem Resuspendieren der Proben.

Zur Überprüfung des Kryokonservierungsergebnisses wurden die aufgetauten Proben zentrifugiert und in CGM resuspendiert. Nach einer 24-h-Kultivierung bei 37 °C und 5% CO₂ erfolgte eine CASY-Messung zur Ermittlung der Zellzahl, der Größenverteilung und der Vitalität der Zellen nach der Kryokonservierung.

Die Figuren 3 und 4 zeigen die Ergebnisse für verschiedene Einfrier- und Auftauprotokolle mit einem erfindungsgemäß verwendeten Probenträger im Vergleich zu einer Kontrollprobe (Kryokonservierung im Reagenzglas). Die Kryokonservierung mit dem erfindungsgemäß verwendeten Probenträger ergibt eine erhebliche Erhöhung der Viabilität und der Zahl lebender Zellen für alle Versuchsbedingungen, insbesondere die schnellen Einfriervorgänge.

## Patentansprüche

1. Verfahren zur Kryokonservierung von biologischem Material, mit den Schritten:
- Einfüllen von biologischen Proben in einen Probenträger mit mindestens einem Probenreservoir (2, 21, 22, 23) zur Aufnahme der biologischen Proben, wobei im Probenreservoir (2, 21, 22, 23) ein Trägerkörper (3, 31, 32, 33) aus einem Material mit einer Volumenstruktur angeordnet ist, die eine Vielzahl von offenen, inneren Hohlräumen (41, 43) aufweist, in welche die biologischen Proben eingefüllt werden, und
- Kühlung des Probenträgers,
**dadurch gekennzeichnet, dass**
- der Trägerkörper (3, 31, 32, 33) aus dem Material eines Fahrzeugkatalysators, aus biokompatiblen Materialien pflanzlichen oder tierischen Ursprungs, aus einem natürlichen Material auf Polysaccharidbasis oder aus biomorpher Keramik gebildet ist.

2. Verfahren gemäß Anspruch 1, bei dem ein vorgekühlter Trägerkörper verwendet wird.

3. Verfahren gemäß mindestens einem der vorhergehenden Ansprüche, bei dem ein Trägerkörper verwendet wird, der aus einem Kompositmaterial besteht, bei dem die inneren Hohlräume zumindest teilweise mit einem Material beschichtet sind, dessen Wärmeleitfähigkeit gleich der Wärmeleitfähigkeit von Metallen ist.

4. Verfahren gemäß einem der vorhergehenden Ansprüche, bei dem ein Trägerkörper (3, 31, 32, 33) verwendet wird, der Waben, Poren, Kanäle oder schwamm- oder schaumartige Hohlräume besitzt.

5. Verfahren gemäß einem der vorhergehenden Ansprüche, bei dem ein Trägerkörper (3, 31, 32, 33) verwendet wird, dessen Form an die Innenform des Probenreservoirs (2, 21, 22, 23) angepasst oder geringfügig größer ist.

6. Verfahren gemäß Anspruch 5, mit dem Schritt:
- Festsetzen des Trägerkörpers (3, 31, 32, 33) im Probenreservoir (2, 21, 22, 23) unter Wirkung einer elastischen Deformation.

7. Verfahren gemäß einem der vorhergehenden Ansprüche, bei dem der Trägerkörper (3, 31, 32, 33) mit mindestens einem Wärmeaustauschelement (51, 52, 53) ausgestattet ist und als Wärmeaustauscher verwendet wird.

8. Verfahren gemäß Anspruch 7, bei dem eine Vielzahl von Probenreservoiren vorgesehen und die jeweils zugehörigen Trägerkörper über die Wärmeaustauschelemente (52, 53) miteinander verbunden werden.

9. Verwendung von Kraftfahrzeugkatalysator-Strukturen, von biokompatiblen Materialien pflanzlichen oder tierischen Ursprungs, von eine natürlichen Material auf Polysaccharidbasis oder von biomorpher Keramik zur Bildung eines Trägerkörpers mit einer Volumenstruktur, die eine Vielzahl von offenen, inneren Hohlräumen aufweist, zur Kryokonservierung von biologischen Proben.

## Claims

1. Method for cryoconservation of biological material, having the steps:
- filling biological samples into a sample carrier having at least one sample reservoir (2, 21, 22, 23) for receiving the biological samples, a carrier body (3, 31, 32, 33) made of a material with a volume structure being disposed in the sample reservoir (2, 21, 22, 23), said volume structure having a multiplicity of open internal hollow cavities (41, 43) into which the biological samples are filled, and
- cooling of the sample carrier,
**characterised in that**
- the carrier body (3, 31, 32, 33) is formed from the material of a vehicle catalyst, from biocompatible materials of vegetable or animal origin, from a natural material based on polysaccharide or from biomorphic ceramic material.

2. Method according to claim 1, in which a pre-cooled carrier body is used.

3. Method according to at least one of the preceding claims, in which a carrier body is used which comprises a composite material in which the internal hollow cavities are coated at least partially with a material, the heat conductivity of which is equal to the heat conductivity of metals.

4. Method according to one of the preceding claims, in which a carrier body (3, 31, 32, 33) is used which has honeycombs, pores, channels or sponge- or foam-like hollow cavities.

5. Method according to one of the preceding claims, in which a carrier body (3, 31, 32, 33) is used, the shape of which is adapted to the internal shape of the sample reservoir (2, 21, 22, 23) or is slightly larger.

6. Method according to claim 5, with the step:
- fixing the carrier body (3, 31, 32, 33) in the sample reservoir (2, 21, 22, 23) under the effect of an elastic deformation.

7. Method according to one of the preceding claims, in which the carrier body (3, 31, 32, 33) is equipped with at least one heat exchange element (51, 52, 53) and is used as heat exchanger.

8. Method according to claim 7, in which a multiplicity of sample reservoirs is provided and the respectively associated carrier bodies are connected to each other via the heat exchange elements (52, 53).

9. Use of automotive vehicle catalyst structures, of biocompatible materials of vegetable or animal origin, of a natural material based on polysaccharide or of biomorphic ceramic material in order to form a carrier body with a volume structure which has a multiplicity of open internal hollow cavities for cryoconservation of biological samples.

## Revendications

1. Procédé pour la cryoconservation de matériel biologique, comportant les étapes :
- introduction d'échantillons biologiques dans un porte-échantillons avec au moins un réservoir pour échantillons (2, 21, 22, 23) destiné à recevoir les échantillons biologiques, le réservoir pour échantillons (2, 21, 22, 23) contenant un corps support (3, 31, 32, 33) réalisé dans un matériau avec une structure volumique munie d'une pluralité de cavités (41, 43) intérieures ouvertes, dans lesquelles sont introduits les échantillons biologiques, et
- refroidissement du porte-échantillons,
**caractérisé en ce que**
- le corps support (3, 31, 32, 33) est réalisé dans le matériau d'un catalyseur de véhicule, dans des matériaux biocompatibles d'origine végétale ou animale, dans un matériau naturel à base de polysaccharide ou dans une céramique biomorphe.

2. Procédé selon la revendication 1, dans lequel est utilisé un corps support refroidi au préalable.

3. Procédé selon au moins l'une des revendications précédentes, dans lequel est utilisé un corps support qui est réalisé dans un matériau composite, dans lequel les cavités intérieures sont revêtues au moins partiellement d'un matériau dont la conductivité thermique est identique à la conductivité thermique des métaux.

4. Procédé selon l'une quelconque des revendications précédentes, dans lequel est utilisé un corps support (3, 31, 32, 33) qui comporte des alvéoles, des pores, des canaux ou des cavités du type éponge ou mousse.

5. Procédé selon l'une quelconque des revendications précédentes, dans lequel est utilisé un corps support (3, 31, 32, 33), dont la forme est adaptée à la forme intérieure du réservoir pour échantillons (2, 21, 22, 23) ou est légèrement plus grande que celui-ci.

6. Procédé selon la revendication 5, comportant l'étape de:
- fixation du corps support (3, 31, 32, 33) dans le réservoir pour échantillons (2, 21, 22, 23) sous l'effet d'une déformation élastique.

7. Procédé selon l'une quelconque des revendications précédentes, dans lequel le corps support (3, 31, 32, 33) est muni d'au moins un élément d'échange de chaleur (51, 52, 53) et est utilisé comme échangeur thermique.

8. Procédé selon la revendication 7, dans lequel est prévue une pluralité de réservoirs pour échantillons et les corps support respectivement associés sont reliés entre eux par les éléments d'échange de chaleur (52, 53).

9. Utilisation de structures de catalyseurs de véhicule, de matériaux biocompatibles d'origine végétale ou animale, d'un matériau naturel à base de polysaccharide ou de céramique biomorphe pour former un corps support avec une structure volumique munie d'une pluralité de cavités intérieures ouvertes, pour la cryoconservation d'échantillons biologiques.
